# EUROPÄISCHE PATENTSCHRIFT

(11) **EP 2 313 639 B1**
(45) Veröffentlichungstag und Bekanntmachung des Hinweises auf die Patenterteilung: **07.03.2018**
(21) Anmeldenummer: 09780712.7
(22) Anmeldetag: 16.07.2009
(51) Int. Cl.: F02M 37/22

(54) **KRAFTSTOFFFILTER**
FUEL FILTER
FILTRE À CARBURANT

(30) Priorität: 18.08.2008 DE 102008038159
(43) Veröffentlichungstag der Anmeldung: 27.04.2011
(60) Teilanmeldung: 17195943.0
(73) Patentinhaber: MAHLE International GmbH, 70376 Stuttgart (DE)
(72) Erfinder: BRAUNHEIM, Michael, 73033 Göppingen (DE)
(74) Vertreter: BRP Renaud & Partner mbB Rechtsanwälte Patentanwälte Steuerberater
(86) Internationale Anmeldenummer: PCT/EP2009/059154
(87) Internationale Veröffentlichungsnummer: WO 2010/020489

(56) Entgegenhaltungen:
- EP-A1- 1 669 590
- EP-B1- 2 304 215
- WO-A-2008/023029
- DE-A1- 3 631 846
- DE-A1- 4 409 570
- DE-A1- 10 138 695
- DE-U1-202006 019 301
- GB-A- 2 241 443

## Beschreibung

Die vorliegende Erfindung betrifft einen Kraftstofffilter für einen Verbrennungsmotor eines Kraftfahrzeuges gemäß dem Oberbegriff des Anspruchs 1. Die Erfindung betrifft außerdem einen, mit einem derartigen Kraftstofffilter ausgestatteten Verbrennungsmotor eines Kraftfahrzeuges.

Kraftstofffilter finden sich heutzutage in jeglichen Kraftfahrzeugen und dienen dazu, unterschiedliche Arten von Verunreinigungen, wie beispielsweise Feststoffpartikel, Wasser, etc., aus dem zu verbrennenden Kraftstoff vor Eintritt in einen Verbrennungsmotor herauszufiltern. Besonderes Augenmerk wird dabei in letzter Zeit auf das Herausfiltern von Wasser aus dem zu verbrennenden Kraftstoff gelegt, da Wasseranteile im Kraftstoff zu einer Korrosion und zu einer Beeinträchtigung der Motorleistung führen können und da der Wassergehalt insbesondere in modernen Biokraftstoffen, wie beispielsweise Biodiesel, deutlich höher ist, als bei bekannten fossilen Kraftstoffen. Der hohe Wasseranteil in Biokraftstoffen rührt dabei insbesondere daher, dass diese stark hygroskopisch sind. Aus diesem Grund ist es bekannt, Kraftstofffilter mit sogenannten Wasserabscheidern zu kombinieren, um dadurch zu erreichen, dass dem Verbrennungsmotor möglichst reiner Kraftstoff zur Verbrennung zugeführt wird. Das abgeschiedene Wasser wird in geeigneten Wassersammelräumen des Wasserabscheiders gesammelt und periodisch bzw. nach Bedarf abgelassen. In eine Ablassleitung des Wasserabscheiders kann dabei noch ein Aktivkohlefilter integriert sein, welches die im abzulassenden Wasser verbliebenen Kohlenstoffanteile absorbiert und dadurch verhindert, dass diese ungewollt in die Umgebung gelangen.

Aus der EP 2 304 215 B1 ist ein Kraftstofffilter mit einem Filtergehäuse bekannt, in dem ein radial durchströmbares Filterelement aufgenommen ist. Das Kraftstofffilter weist zudem Wasserabschneider auf, die im Gehäuse angeordnet sind.

Aus der DE 101 38 965 A1 ist ein Kraftstofffilter mit einem Gehäuse und einem darin angeordneten Filterelement bekannt. Im Betrieb des Kraftstofffilters bilden sich am Filterelement Wassertröpfchen aus dem Kraftstoff und gelangen in einen Sammelraum. Im Sammelraum erfolgt ein weiteres Abscheiden von Wasser mit Hilfe einer semipermeablen Membran. Hierzu wird die Membran beim Erreichen eines vorgegebenen Pegels im Sammelraum von einer Mischung aus Kraftstoff und Wasser durchströmt.

Ein weiterer Kraftstofffilter mit einem Wasserabscheider ist aus DE 10 2004 042 245 A1 bekannt. Die Erfindung beschäftigt sich mit dem Problem, einen Kraftstofffilter der eingangs erwähnten Art dahingehend zu verbessern, dass ein besonders hoher Wasserabscheidegrad erzielt werden kann.

Dieses Problem wird erfindungsgemäß durch die Gegenstände der unabhängigen Ansprüche gelöst. Vorteilhafte Weiterbildungen sind Gegenstand der abhängigen Ansprüche.

Die Erfindung beruht auf dem allgemeinen Gedanken, im Unterschied zu bisherigen Kraftstofffiltern mit einem zugehörigen Wasserabscheider, nunmehr ein zweistufiges Wasserabscheidekonzept zu realisieren, indem ein zweiter Wasserabscheider vorgesehen wird, der in Reihe geschaltet zum ersten Wasserabscheider des Kraftstofffilters angeordnet und strömungsberuhigt ausgebildet ist, wodurch vorzugsweise eine rein laminare Strömung eines Kraftstoff-Wasser-Gemisches im zweiten Wasserabscheider und dadurch ein besonders hoher Wasserabscheidegrad erreicht werden können. Der erfindungsgemäße Kraftstofffilter weist dabei in üblicher Weise ein, in einem Filtergehäuse angeordnetes und in Radialrichtung von einer Rohseite zu einer Reinseite durchströmtes Filterelement, sowie den vorher erwähnten ersten Wasserabscheider zur Abscheidung des im Kraftstoff enthaltenen Wassers auf. Erfindungsgemäß wird nun zu diesem ersten Wasserabscheider ein zweiter Wasserabscheider in Reihe geschaltet und derart ausgebildet, dass das durch diesen strömende Kraftstoff-Wassergemisch keine turbulente, sondern lediglich eine laminare Strömung aufweist und sich dadurch das noch im Kraftstoff enthaltene Wasser besonders gut sedimentieren und abtrennen lässt. Diesem zweiten Wasserabscheider wird dabei vorzugsweise jedoch nicht die gesamte Kraftstoffmenge zugeführt, sondern nur das am ersten Wasserabscheider abgeschiedene Wasser zusammen mit einer Kraftstoffphase.

Der Durchfluss sowohl durch den ersten als auch durch den zweiten Wasserabscheider erfolgt dabei vorzugsweise kontinuierlich und erfindungsgemäß aufgrund eines, im Kraftstoffsystem vorhandenen bzw. selbst erzeugten Druckgefälles, indem eine Kraftstoffabzugsleitung aus dem zweiten Wasserabscheider mit einer zu einem Kraftstofftank führenden Rücklaufleitung verbunden wird. Die Abzugsleistung aus dem zweiten Wasserabscheider ist dabei so eingestellt, dass der Abtransport von dem am ersten Wasserabscheider abgeschiedenen Wasser mit einer Kraftstoffphase erfolgen kann und dass die laminare Strömung im zweiten Wasserabscheider gewährleistet werden kann. Mittels dem erfindungsgemäßen Kraftstofffilter kann der im Kraftstoff enthaltene Wasseranteil besonders gut und in besonders hohem Maße aus dem Kraftstoff abgetrennt werden, wodurch einerseits die Korrosionsneigung im nachfolgenden Verbrennungsmotor verringert und andererseits die Brennleistung des zu verbrennenden Kraftstoffes aufgrund des herausgefilterten Wasseranteils gesteigert werden können. Von weiterem Vorteil ist bei dem erfindungsgemäßen Kraftstofffilter mit den zwei in Reihe geschalteten Wasserabscheidern, dass das aus dem zweiten Wasserabscheider abzulassende Wasser einen im Vergleich zu einer Ausführungsform mit lediglich einem einzigen Wasserabscheider, deutlich reduzierten Kraftstoffanteil aufweist, so dass ein diesen Kraftstoffanteil herausfilterndes Filterelement, beispielsweise ein Aktivkohlefilter, einerseits kleiner ausgelegt werden kann oder andererseits deutlich weniger oft gewartet bzw. ausgetauscht werden muss. Darüber hinaus lässt sich mit einem derartigen Kraftstofffilter auch eine Emissionsrate von ungewollt über den Wasserabscheider mit dem abzulassenden Wasser in die Umgebung abgelassenen Kraftstoffanteil reduzieren, was insbesondere im Hinblick auf die immer strenger werdenden Umweltschutzauflagen günstig ist.

Bei einer vorteilhaften Weiterbildung der erfindungsgemäßen Lösung, ist eine Abzugsmenge an Kraftstoff aus dem zweiten Wasserabscheider sehr viel kleiner als der Kraftstoffdurchfluss durch den Kraftstofffilter und den ersten Wasserabscheider. Ein um den Faktor 1/20 bis /200 geringerer Durchfluss bietet dann die Vorraussetzung dafür, dass im zweiten Wasserabscheider eine ausschließlich laminare Strömung realisierbar ist, die keine Turbulenzen aufweist und dadurch eine besonders gute Trennung des Wassers vom Kraftstoff ermöglicht. Prinzipiell kann dabei auch die Abzugsmenge an Kraftstoff aus dem zweiten Wasserabscheider begrenzt werden, beispielsweise auf einige Liter je Stunde. Eine derartige Begrenzung kann dabei garantieren, dass im zweiten Wasserabscheider eine ausschließlich laminare Strömung vorliegt, die keine Turbulenzen aufweist und dadurch eine besonders hohe Abscheiderate an Wasser ermöglicht.

Bei einer vorteilhaften Weiterbildung der erfindungsgemäßen Lösung, ist an einem Wasserablass des zweiten Wasserabscheiders eine Ventileinrichtung mit zumindest zwei redundanten, steuerbaren und in Reihe geschalteten Ventilen vorgesehen, so dass ein Wasserablass aus dem zweiten Wasserabscheider ausschließlich dann möglich ist, sofern beide Ventile geöffnet werden bzw. sind. Durch die beiden in Reihe geschalteten Ventile kann somit gewährleistet werden, dass kein ungewolltes Wasserablassen zu befürchten ist, insbesondere dann, wenn eines der beiden Ventile beispielsweise defekt ist. Zu einem gewollten Wasserablassen müssen beide Ventile geöffnet werden, so dass ein ungewolltes Wasserablassen zuverlässig vermieden werden kann. Die Ventile sind dabei vorzugsweise derart ausgebildet, dass sie, beispielsweise über eine Federeinrichtung, im nicht angesteuerten Zustand sowie in einem defekten Zustand, in ihre Schließstellung vorgespannt sind und dadurch ein ungewolltes Austreten von Wasser aus dem Wasserabscheider ebenfalls verhindern. Bei einer weiteren vorteilhaften Ausführungsform der erfindungsgemäßen Lösung, ist im Bereich des Wasserablasses des zweiten Wasserabscheiders ein Adsorptionsfilter für Kohlenwasserstoffe, insbesondere in der Art eines Aktivkohlefilters, vorgesehen. Aktivkohle ist eine äußerst feinkörnige Kohle mit extrem großer innerer Oberfläche, die aufgrund dieser großen inneren Oberfläche als Adsorptionsmittel, insbesondere für Kohlenwasserstoffe, eingesetzt wird. Aktivkohle besteht überwiegend aus Kohlenstoff mit hochporöser Struktur, wobei die Poren ähnlich wie bei einem Schwamm untereinander verbunden sind. Die innere Oberfläche von Aktivkohle beträgt zwischen 300 und 2000 m²/g Kohle, wodurch ein hohes Adsorptionsvolumen an Kohlenwasserstoffen erreichbar ist.

Weitere wichtige Merkmale und Vorteile der Erfindung ergeben sich aus den Unteransprüchen, aus den Zeichnungen und aus der zugehörigen Figurenbeschreibung anhand der Zeichnungen.

Es versteht sich, dass die vorstehend genannten und die nachstehend noch zu erläuternden Merkmale nicht nur in der jeweils angegebenen Kombination, sondern auch in anderen Kombinationen oder in Alleinstellung verwendbar sind, ohne den Rahmen der vorliegenden Erfindung zu verlassen.

Bevorzugte Ausführungsbeispiele der Erfindung sind in den Zeichnungen dargestellt und wird in der nachfolgenden Beschreibung näher erläutert, wobei sich gleiche Bezugszeichen auf gleiche oder ähnliche oder funktional gleiche Bauteile beziehen.

Dabei zeigen, jeweils schematisch,
- Fig. 1: eine mögliche Ausführungsform eines Kraftstoffversorgungssystems eines Verbrennungsmotors mit einem erfindungsgemäßen Kraftstofffilter,
- Fig. 2: eine Schnittdarstellung durch eine mögliche Ausführungsform eines erfindungsgemäßen Kraftstofffilters.

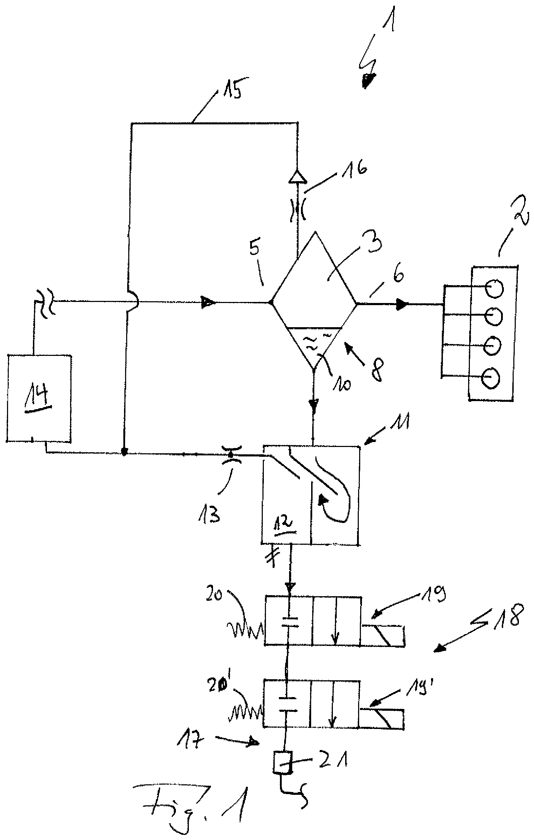

Entsprechend der Fig. 1, weist ein Kraftstoffversorgungssystem 1 für einen Verbrennungsmotor 2, ein Kraftstofffilter 3 auf, mit welchem Verunreinigungen, beispielsweise Feststoffpartikel und Wasseranteile, aus einem, dem Verbrennungsmotor 2 zur Verbrennung zuzuführenden Kraftstoff abgetrennt werden. Die Flussrichtung des Kraftstoffes im Kraftstoffversorgungssystem 1 ist dabei durch entsprechende Pfeile an den Kraftstoffleitungen symbolisiert.

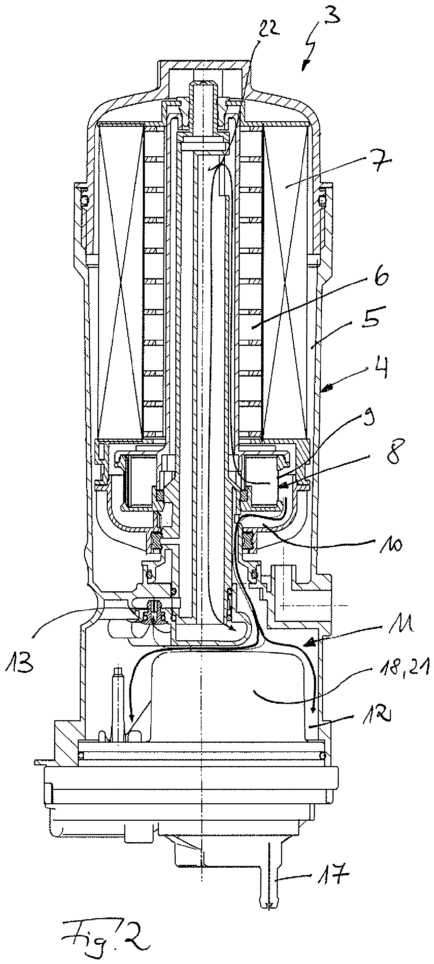

Das Kraftstofffilter 3 weist in üblicher Weise, welche auch gemäß der Fig. 2 dargestellt ist, ein, in einem Filtergehäuse 4 angeordnetes und in Radialrichtung von einer Rohseite 5 zu einer Reinseite 6 durchströmtes Filterelement 7 auf. Des Weiteren weist das Kraftstofffilter 3 einen ersten Wasserabscheider 8 auf, der bei der in Fig. 2 gezeigten Ausführungsform des Kraftstofffilters 3 unterhalb des stehend angeordneten und als Ringfilter ausgebildeten Filterelementes 5 angeordnet ist.

Der erste Wasserabscheider 8 kann beispielsweise eine ringförmige und in ähnlicher Weise wie das Ringfilterelement 7 angeordnete, das heißt insbesondere stehend angeordnete, hydrophobe Membran 9 aufweisen, welche für Kraftstoff durchlässig, für Wasser jedoch undurchlässig ist. Hierdurch wird der im Kraftstoff vorhandene Wasseranteil an der Membran 9 koalesziert bzw. gesammelt und nach Erreichen einer bestimmten Tropfengröße nach unten in einen ersten Wassersammelraum 10 abgeführt. Erfindungsgemäß weist nun das Kraftstofffilter 3 einen zum ersten Wasserabscheider 8 in Reihe geschalteten und strömungsberuhigt ausgeführten zweiten Wasserabscheider 11 auf, weicher gemäß der in der Fig. 2 gezeigten Ausführungsform, unterhalb des ersten Wasserabscheiders 8 angeordnet ist. Strömungsberuhigt heißt in diesem Fall, dass das durch den zweiten Wasserabscheider 11 strömende Kraftstoff-WasserGemisch laminar strömt, das heißt ohne Turbulenzen, und dadurch eine besonders gute Sedimentation von noch enthaltenem Wasser ermöglicht. Das im zweiten Wasserabscheider 11 sedimierte, das heißt ausgeschiedene Wasser, wird in einem zweiten Wassersammelraum 12 gesammelt und bei Bedarf abgelassen.

Ein Kraftstoffabzug aus dem zweiten Wasserabscheider 11 erfolgt dabei mittels eines im Kraftstoffversorgungssystem 1 vorhandenen bzw. erzeugten Druckgefälles. Beispielsweise kann Kraftstoff in dem Kraftstoffversorgungssystem 1, welches beispielsweise unter Druck steht, über eine Drosseleinrichtung 13 in eine drucklose, zu einem Kraftstofftank 14 führende Rücklaufleitung abgezogen werden (vgl. Fig. 1). Zusätzlich dazu wird ein Kraftstoffabzug aus dem zweiten Wasserabscheider 11 über eine, in einer Zulaufleitung des Kraftstofffilters 3 angeordnete Venturidüse/Saugstrahlpumpe (ohne Darstellung) erfolgen. Wichtig ist, dass die Strömung im zweiten Wasserabscheider 11 laminar bleibt. Dies ist insbesondere dann gegeben, sofern eine Abzugsmenge an Kraftstoff aus dem zweiten Wasserabscheider 11 sehr viel kleiner ist als der

Durchfluss durch den Kraftstofffilter 3 und der ersten Wasserrabscheider 8. Je nach Größe und Durchfluss des Kraftstofffilters 3 bietet ein um den Faktor 1/20 bis 1/200 geringerer Durchfluss durch den Wasserabscheider 11 gute Vorraussetzung für eine laminare Strömung.

Wie den Fig. 1 und 2 zu entnehmen ist, sind sowohl der erste als auch der zweite Wasserabscheider 8, 11 auf der Reinseite 6 des Kraftstofffilters 3 angeschlossen, wobei prinzipiell auch denkbar ist, dass die beiden Wasserabscheider 8 und 11 auf der Rohseite 5 des Kraftstofffilters 3 vorgesehen sind.

Um die Funktion der beiden Wasserabscheider 8 und 11 zuverlässig aufrecht erhalten zu können, ist im zweiten Wasserabscheider 11 vorzugsweise zumindest ein Wassersensor vorgesehen, der einen Wasserstand im zweiten Wassersammelraum 12 ermittelt und kontinuierlich überprüft und gegebenenfalls ein Signal zu einem Wasserablass aus dem zweiten Wassersammelraum 12 erzeugt. Zum Ablass des im zweiten Wassersammelraum 12 gesammelten Wassers, ist an einem Wasserablauf 17 des zweiten Wasserabscheiders 11 eine Ventileinrichtung 18 mit zumindest zwei redundanten, steuerbaren und in Reihe geschalteten Ventilen 19 und 19' vorgesehen, so dass ein Wasserablass ausschließlich dann erfolgen kann, sofern beide Ventile 19 und 19' geöffnet sind. Ist beispielsweise eines der beiden Ventile 19, 19' defekt und lässt sich daher nicht steuern, so kann trotzdem zuverlässig verhindert werden, dass Wasser aus dem zweiten Wasserabscheider 11 ungewollt in die Umgebung austreten kann. Darüber hinaus sind die beiden Ventile 19 und 19' vorzugsweise jeweils mittels einer Federeinrichtung 20 und 20' ausgestattet, die die Ventile 19 und 19' insbesondere in unbestromtem Zustand in deren Schließrichtung vorspannt.

Im Bereich des Wasserablasses 17, entweder in Strömungsrichtung vor oder nach der Ventileinrichtung 18, kann ein Adsorptionsfilter 21 für Kohlenwasserstoffe vorgesehen sein, welches insbesondere als Aktivkohlefilter ausgebildet ist. Ein derartiges Adsorptionsfilter fängt die noch im abzulassenden Wasser enthaltenen Kohlenwasserstoffe auf und hindert diese an einem Austritt in die Umgebung, so dass bei einem erforderlichen Wasserablassen ausschließlich Wasser und nicht zusätzlich noch Kraftstoff in die Umgebung abgelassen wird.

Die strömungsberuhigte Ausbildung des zweiten Wasserabscheiders 11, kann beispielsweise durch konstruktive Ausgestaltungen, wie beispielsweise Leit- und/oder Prallelemente erzeugt werden. Darüber hinaus ist denkbar, dass das Filterelement 7 und/oder der erste Wasserabscheider 8 und/oder der zweite Wasserabscheider 11 als separate Bauteile oder als gemeinsames Kombinationsbauteil ausgebildet sind. Bei einer Ausbildung als separate Bauteile ist dadurch ein separater und individueller Austausch der einzelnen Komponenten möglich, während bei einer Ausbildung als Kombinationsbauteil jeweils zumindest zwei miteinander verbundene Komponenten gemeinsam ausgetauscht werden müssen.

Wie der Fig. 2 zu entnehmen ist, erfolgt ein Abzug des gereinigten Kraftstoffes über ein Mittelrohr 22, wodurch das Kraftstofffilter 3 in üblicher Weise als Aufsatzfilter konzipiert werden kann.

Mit dem erfindungsgemäßen Kraftstofffilter 3 mit zwei in Reihe zueinander geschalteten Wasserabscheidern 8 und 11, kann eine besonders hohe Wasserabscheiderate erzielt werden, wodurch einerseits das Korrosionsrisiko für den Verbrennungsmotor 2 gesenkt und andererseits die Leistung des Verbrennungsmotors 2 gesteigert werden können. Aufgrund der Tatsache, dass ein Kraftstoffabzug aus dem zweiten Wasserabscheider 11 in den Kraftstofftank 14 oder auf die Rohseite 5 des Kraftstofffilters 3 führt, kann darüber hinaus zuverlässig ausgeschlossen werden, dass Schmutzpartikel, welche beispielsweise bei einem Austausch des Filterelementes 7 in den ersten Wassersammelraum 10 gelangen, später unfiltriert zum Verbrennungsmotor 2 gelangen und dadurch diesen schädigen können.

Die Einleitung der Abzugsmenge in die Rücklaufleitung zum Kraftstofftank 14 verhindert zusätzlich für den Fall, dass der zweite Wassersammelraum 12 vollständig mit Wasser gefüllt ist, aber vorübergehend kein Wasser abgelassen wird, sich der Wassersammelraum 10 des ersten Wasserabscheiders 8 mit Wasser füllt und bei weiterem Wasserzulauf ein Wasserdurchbruch durch die Membran 9 mit Schädigung des Verbrennungsmotors 2 erfolgt, weil nach Füllung des zweiten Wassersammelraum 12 weiteres Wasser mit der Abzugsmenge zurück in den Kraftstofftank 14 geführt wird. Im Kraftstofftank 14 puffert die große Kraftstoffmenge dieses Wasser für einen begrenzten Zeitraum. Dieser Zeitraum steht zusätzlich zur Verfügung um das Ablassen von Wasser durchzuführen.

## Patentansprüche

1. Kraftstofffilter (3) für einen Verbrennungsmotor (2) eines Kraftfahrzeuges mit einem, in einem Filtergehäuse (4) angeordneten und in Radialrichtung von einer Rohseite (5) zu einer Reinseite (6) durchströmten Filterelement (7), wobei das Kraftstofffilter (3) einen ersten Wasserabscheider (8) aufweist,
wobei,
- das Kraftstofffilter (3) einen zum ersten Wasserabscheider (8) in Reihe geschalteten zweiten Wasserabscheider (11) aufweist, der mit dem ersten Wasserabscheider (8) verbunden ist, wobei ein Kraftstoffabzug aus dem zweiten Wasserabscheider (11) mittels eines im Kraftstoffversorgungssystem (1) vorhandenen bzw. erzeugten Druckgefälles erfolgt,
- der zweite Wasserabscheider (11) strömungsberuhigt ist,
- der erste und der zweite Wasserabscheider (8,11) auf einer Reinseite (6) des Kraftstofffilters (3) angeschlossen sind,
**dadurch gekennzeichnet,**
- **dass** eine Kraftstoffabzugsleitung aus dem zweiten Wasserabscheider (11) über eine Drosseleinrichtung (13) mit einer, zu einem Kraftstofftank (14) führenden, Rücklaufleitung verbunden ist,
- **dass** der Kraftstofffilter (3) so ausgebildet ist, dass zusätzlich ein Kraftstoffabzug aus dem zweiten Wasserabscheider (11) über eine, in einer Zulaufleitung des Kraftstofffilters (3) angeordnete Venturidüse oder Saugstrahlpumpe erfolgt.

2. Kraftstofffilter nach Anspruch 1,
**dadurch gekennzeichnet,**
**dass** eine Abzugsmenge an Kraftstoff aus dem zweiten Wasserabscheider (11) vorzugsweise um den Faktor 1/20 bis 1/200 geringer ist als der Durchfluss durch den Kraftstofffilter (3) ist.

3. Kraftstofffilter nach Anspruch 1 oder 2,
**dadurch gekennzeichnet,**
**dass** der Kraftstoffabzug auf die Rohseite (5) des Kraftstofffilters (3) und/oder zum Kraftstofftank (14) erfolgt.

4. Kraftstofffilter nach einem der Ansprüche 1 bis 3,
**dadurch gekennzeichnet,**
**dass** im zweiten Wasserabscheider (11) zumindest ein Wassersensor vorgesehen ist, der einen Wasserstand ermittelt.

5. Kraftstofffilter nach einem der Ansprüche 1 bis 4,
**dadurch gekennzeichnet,**
**dass** der erste und der zweite Wasserabscheider (8,11) unterhalb des Filterelementes (7) des Kraftstofffilters (3) angeordnet sind.

6. Kraftstofffilter nach einem der Ansprüche 1 bis 5,
**dadurch gekennzeichnet,**
**dass** an einem Wasserablass (17) des zweiten Wasserabscheiders (11) eine Ventileinrichtung (18) mit zumindest zwei redundanten, steuerbaren und in Reihe geschalteten Ventilen (19,19') vorgesehen ist, so dass ein Wasserablass ausschließlich dann erfolgt, sofern beide Ventile (19,19') geöffnet sind.

7. Kraftstofffilter nach einem der Ansprüche 1 bis 6,
**dadurch gekennzeichnet,**
**dass** im Bereich des Wasserablasses (17) des zweiten Wasserabscheiders (11) ein Adsorptionsfilter (21) für Kohlenwasserstoffe, insbesondere ein Aktivkohlefilter, vorgesehen ist.

8. Kraftstofffilter nach einem der Ansprüche 1 bis 7,
**dadurch gekennzeichnet,**
**dass** ein Kraftstoffabzug aus dem zweiten Wasserabscheider (11) kontinuierlich erfolgt.

9. Kraftstofffilter nach einem der Ansprüche 1 bis 8,
**dadurch gekennzeichnet,**
**dass** das Filterelement (7) und/oder der erste Wasserabscheider (8) und/oder der zweite Wasserabscheider (11) als separate Bauteile oder als gemeinsames Kombinationsbauteil ausgebildet sind.

10. Kraftfahrzeug mit einem, ein Kraftstofffilter (3) nach einem der Ansprüche 1 bis 9 aufweisenden Verbrennungsmotor.

## Claims

1. Fuel filter (3) for an internal combustion engine (2) of a motor vehicle having a filter element (7) arranged in a filter housing (4) and through which fuel flows in a radial direction from a dirty side (5) to a clean side (6), wherein the fuel filter (3) has a first water separator (8),
wherein
- the fuel filter (3) has a second water separator (11) connected in series in relation to the first water separator (8) and which is connected to the first water separator (8), wherein fuel is withdrawn from the second water separator (11) by means of a pressure drop present or generated in the fuel supply system (1),
- the second water separator (11) is flow-abated,
- the first and the second water separators (8, 11) are connected at a clean side (6) of the fuel filter (3),
**characterised in that**
- a fuel withdrawal line out of the second water separator (11) is connected by a throttle device (13) to a return line leading to a fuel tank (14),
- the fuel filter (3) is designed such that, in addition, fuel is withdrawn from the second water separator (11) by way of a Venturi nozzle or an ejector pump arranged in an intake line of the fuel filter (3).

2. Fuel filter according to claim 1,
**characterised in that**
a quantity of fuel withdrawn from the second water separator (11) is preferably lower by a factor of 1/20 to 1/200 than the flow through the fuel filter (3).

3. Fuel filter according to claim 1 or 2,
**characterised in that**
the fuel is withdrawn at the dirty side (5) of the fuel filter (3) and/or in the direction of the fuel tank (14).

4. Fuel filter according to any one of claims 1 to 3,
**characterised in that**
at least one water sensor is provided in the second water separator (11) and determines a water level.

5. Fuel filter according to any one of claims 1 to 4,
**characterised in that**
the first and the second water separators (8, 11) are arranged below the filter element (7) of the fuel filter (3).

6. Fuel filter according to any one of claims 1 to 5,
**characterised in that**
a valve mechanism (18) having at least two redundant, controllable valves (19, 19') connected in series is provided on a water drain (17) of the second water separator (11), so water only drains if both valves (19, 19') are open.

7. Fuel filter according to any one of claims 1 to 6,
**characterised in that**
an adsorption filter (21) for hydrocarbons, in particular an activated carbon filter, is provided in the region of the water drain (17) of the second water separator (11).

8. Fuel filter according to any one of claims 1 to 7,
**characterised in that**
fuel is continuously withdrawn from the second water separator (11).

9. Fuel filter according to any one of claims 1 to 8,
**characterised in that**
the filter element (7) and/or the first water separator (8) and/or the second water separator (11) is/are designed as separate components or as a common combined component.

10. Motor vehicle with an internal combustion engine having a fuel filter (3) according to any one of claims 1 to 9.

## Revendications

1. Filtre à carburant (3) pour un moteur à combustion (2) d'un véhicule automobile avec un élément de filtre (7) agencé dans un boîtier de filtre (4) et traversé dans le sens radial d'un côté produit brut (5) à un côté produit pur (6), dans lequel le filtre à carburant (3) présente un premier séparateur d'eau (8),
dans lequel
- le filtre à carburant (3) présente un second séparateur d'eau (11) monté en série par rapport au premier séparateur d'eau (8) qui est raccordé au premier séparateur d'eau (8), dans lequel un retrait de carburant est effectué du second séparateur d'eau (11) au moyen d'une chute de pression générée ou présente dans le système d'alimentation de carburant (1),
- le second séparateur d'eau (11) est à écoulement calme,
- le premier et le second séparateur d'eau (8, 11) sont raccordés sur un côté produit pur (6) du filtre à carburant (3),
**caractérisé en ce que**
- une conduite de retrait de carburant du second séparateur d'eau (11) est raccordée par le biais d'un dispositif d'étranglement (13) à une conduite de retour menant à un réservoir de carburant (14),
- le filtre à carburant (3) est réalisé de sorte qu'en outre, un retrait de carburant du second séparateur d'eau (11) soit effectué par le biais d'une buse Venturi ou pompe à jet d'aspiration agencée dans une conduite d'amenée du filtre à carburant (3).

2. Filtre à carburant selon la revendication 1,
**caractérisé en ce que**
une quantité de retrait de carburant du second séparateur d'eau (11) est plus faible de préférence du facteur 1/20 à 1/200 que le débit passant par le filtre à carburant (3).

3. Filtre à carburant selon la revendication 1 ou 2,
**caractérisé en ce que**
le retrait de carburant est effectué sur le côté produit brut (5) du filtre à carburant (3) et/ou jusqu'au réservoir de carburant (14).

4. Filtre à carburant selon l'une quelconque des revendications 1 à 3,
**caractérisé en ce que**
au moins un capteur d'eau est prévu dans le second séparateur d'eau (11), lequel détermine un niveau d'eau.

5. Filtre à carburant selon l'une quelconque des revendications 1 à 4,
**caractérisé en ce que**
le premier et le second séparateur d'eau (8, 11) sont agencés sous l'élément de filtre (7) du filtre à carburant (3).

6. Filtre à carburant selon l'une quelconque des revendications 1 à 5,
**caractérisé en ce que**
sur une sortie d'eau (17) du second séparateur d'eau (11) un dispositif de soupape (18) avec au moins deux soupapes (19, 19') redondantes, commandables et montées en série est prévu de sorte qu'une sortie d'eau soit effectuée exclusivement dans la mesure où les deux soupapes (19, 19') sont ouvertes.

7. Filtre à carburant selon l'une quelconque des revendications 1 à 6,
**caractérisé en ce que**
dans la zone de la sortie d'eau (17) du second séparateur d'eau (11) un filtre d'adsorption (21) pour des hydrocarbures, en particulier un filtre à charbon actif est prévu.

8. Filtre à carburant selon l'une quelconque des revendications 1 à 7,
**caractérisé en ce que**
un retrait de carburant du second séparateur d'eau (11) est effectué en continu.

9. Filtre à carburant selon l'une quelconque des revendications 1 à 8,
**caractérisé en ce que**
l'élément de filtre (7) et/ou le premier séparateur d'eau (8) et/ou le second séparateur d'eau (11) sont réalisés comme des composants séparés ou comme composant de combinaison commun.

10. Véhicule automobile avec un moteur à combustion présentant un filtre à carburant (3) selon l'une quelconque des revendications 1 à 9.
